# EUROPÄISCHE PATENTSCHRIFT

(11) **EP 3 839 304 B1**
(45) Veröffentlichungstag und Bekanntmachung des Hinweises auf die Patenterteilung: **14.05.2025**
(21) Anmeldenummer: 20210748.8
(22) Anmeldetag: 30.11.2020
(51) Int. Cl.: F16K 15/06, F16K 27/02

(54) **RÜCKSCHLAGVENTIL SOWIE ANSCHLUSSEINRICHTUNG FÜR EIN RÜCKSCHLAGVENTIL**
CHECK VALVE AND CONNECTION DEVICE FOR A CHECK VALVE
CLAPET ANTI-RETOUR ET DISPOSITIF DE RACCORDEMENT POUR UN CLAPET ANTI-RETOUR

(30) Priorität: 19.12.2019 DE 102019135310
(43) Veröffentlichungstag der Anmeldung: 23.06.2021
(73) Patentinhaber: Otto Egelhof GmbH & Co. KG, 70736 Fellbach (DE)
(72) Erfinder: Auweder, Andreas, 71665 Vaihingen/Enz (DE); Willers, Eike, 70469 Stuttgart (DE); Jahnke, Betina, 73635 Obersteinenberg (DE); Wagner, Bernhard, 70736 Fellbach (DE)
(74) Vertreter: Mammel und Maser Patentanwälte PartG mbB

(56) Entgegenhaltungen:
- DE-A1- 102005 048 965
- DE-A1- 102007 041 163
- DE-U1- 202016 104 461

## Beschreibung

Die Erfindung betrifft ein Rückschlagventil, insbesondere für einen Kälte- oder Wärmekreislauf sowie eine Anschlusseinrichtung für ein solches Rückschlagventil.

Aus der JP 2001 280521 A ist ein Rückschlagventil bekannt. Dieses Rückschlagventil umfasst ein mehrteiliges Gehäuse, welches ein Ventilgehäuse und ein Grundgehäuse umfasst. In dem Ventilgehäuse ist ein Ventilschließglied vorgesehen, welches in einer Ausgangsposition im Ventilsitz, anliegt und eine Ventilöffnung schließt. An dem Ventilschließglied ist ein Führungsabschnitt vorgesehen, der sich durch das Grundgehäuse hindurch erstreckt. Das Ventilgehäuse weist an einem oberen, dem Ventilsitz gegenüberliegenden Ende Öffnungen auf, in welche Rastnasen an dem Grundgehäuse eingreifen, nachdem das Grundgehäuse zum Ventilgehäuse unter Zwischenschaltung des Ventilschließgliedes positioniert ist. Dabei greifen die Rastnasen mit der Hinterschneidung fest und formschlüssig an dem Ventilgehäuse an. Bei diesem Rückschlagventil ist vorgesehen, dass die Durchströmungsrichtung des Mediums in einer axialen Längsachse des Ventilgehäuses und des Grundkörpers liegt, entlang der auch die Öffnungs- und Schließbewegung des Ventilschließgliedes erfolgt.

Aus der DE 10 2005 048 965 A1 ist ein Rückflussverhinderer bekannt, der mehrteilig ausgebildet ist und ein Gehäusekäfig sowie ein damit fest verclipstes Oberteil umfasst. In dem Gehäusekäfig ist ein Ventilkörper sowie eine Rückstellfeder geführt. Der Rückflussverhinderer kann mit Spiel in eine Gehäuseaufnahme einer Gas- oder Flüssigkeitsleitung einsetzbar sein. Hierfür weist der Rückflussverhinderer an einer Außenseite des Gehäusekäfigs Rastnocken auf, die in eine Umfangsnut in der Gehäuseaufnahme der Gas- oder Flüssigkeitsleitung eingreifen.

Aus der DE 20 2016 104 461 U1 ist ein Rückschlagventil mit einem zweiteiligen Gehäuse bekannt. Ein Oberteil und ein Unterteil des Gehäuses werden durch eine Klipsverbindung fest miteinander verbunden. Dieses Rückschlagventil wird durch eine Verclipsung an einer Adapterplatte eines Wärmetauschers befestigt.

Aus der DE 10 2007 041 163 A1 ist ein Absperrventilsystem für einen Hauptzylinder bekannt. Dieses Absperrventilsystem umfasst einen Einsatz mit einem zylindrischen Ventilgehäuse und einem Abdeckelement zum Schließen einer offenen Seite des Ventilgehäuses. Der Einsatz wird in eine Ventilkammer des Absperrventilsystems eingesetzt. Nach dem Einsetzen des Einsatzes in die Ventilkammer wird der Einsatz mit einer Mutter, welche in ein Muttergewinde an der Ventilkammer eingreift, verschraubt, wodurch der Einsatz in der Ventilkammer verspannt und fixiert ist.

Aus der WO 00/01937 A2 ist ein Druckventil bekannt. Dieses Druckventil umfasst ein Ventilgehäuse mit einer Bohrung, welche einen vergrößerten Bohrungsabschnitt aufweist. In den vergrößerten Bohrungsabschnitt wird ein Ventilkörper eingesetzt. Der Ventilkörper ist vor dem Einbau in ein Gehäuse in dem Ventilgehäuse durch eine Rastverbindung gehalten. Dabei ist vorgesehen, dass an dem Ventilkörper ein Ringbund vorgesehen ist, der in eine Aufnahmeringnut in der Wand der Durchgangsbohrung im Ventilgehäuse eingreift. Nach dem Einsetzen des Druckventils in ein entsprechendes Gehäuse wird der Ventilkörper durch ein weiteres, am Kopfstück des Ventilkörpers angreifendes Bauteil in seine axiale Endposition verschoben und dort gehalten. Zur Abdichtung des Druckventils zum Gehäuse ist ein axiales Verspannen der Komponenten des Druckventils, durch das weitere daran angreifende Bauteil vorgesehen.

Aus der EP 1 056 948 B1 ist eine Kolbenpumpe bekannt. Diese Kolbenpumpe umfasst ein Saugventil und ein Druckventil, das einen, mittels einem Vorspannelement in Richtung auf einen Ventilsitz beaufschlagten Ventilschließkörper aufweist. Das Druckventil einschließlich dem zugehörigen Vorspannelement sind an einem eigenständig handhabbaren Bauelement befestigt.

Der Erfindung liegt die Aufgabe zugrunde, ein Rückschlagventil, insbesondere für einen Kälte- oder Wärmekreislauf, vorzuschlagen, bei welchem ein erleichterter Einbau in eine Anschlussstelle einer Anschlusseinrichtung vorgesehen ist, um eine Durchflussmenge eines Mediums zu steuern.

Diese Aufgabe wird durch ein Rückschlagventil gemäß den Merkmalen des Anspruchs 1 gelöst. Zwischen dem Ventilgehäuse und dem Grundgehäuse ist eine Schnittstelle mittels Verbindungselementen gebildet, so dass die Schnittstelle zwischen dem Ventilgehäuse und dem Grundgehäuse in axialer Richtung des Rückschlagventils Spiel umfasst, durch welches der Abstand des Ventilgehäuses und des Grundgehäuses zueinander veränderbar ist. Die Schnittstelle kann bevorzugt mit verrastenden Verbindungselementen ausgebildet sein. Diese Anordnung weist den Vorteil auf, dass während dem Einbau des Rückschlagventils in eine Anschlussstelle einer Anschlusseinrichtung eine Erleichterung aufgrund eines Toleranzausgleiches in axialer Richtung gegeben ist. Bei dem Rückschlagventil ist bevorzugt eine abdichtende Anordnung des Ventilgehäuses zur Anschlussstelle als auch eine abdichtende Anordnung des Grundgehäuses zur Anschlussstelle vorgesehen, wobei in axialer Richtung gesehen zwischen dem das Ventilgehäuse und das Grundgehäuse jeweils aufnehmenden Anschlussabschnitt bzw. Steckabschnitt in axialer Richtung Toleranzen in Bezug auf die Länge und/oder den Abstand der Anschlussabschnitte bzw. Steckabschnitte auftreten können. Durch die Ausgestaltung des Rückschlagventils, bei welchem das Ventilschließglied und der Grundkörper mit axialem Spiel in der Gesamtlänge durch das axiale Spiel zumindest in einem geringen Umfang veränderbar sind, können diese Toleranzen ausgeglichen werden.

Bevorzugt ist vorgesehen, dass das Grundgehäuse und das Ventilgehäuse entlang deren Längsachse relativ zueinander verschiebbar geführt sind. Dadurch kann in einfacher Weise eine Veränderung bezüglich der Gesamtlänge des Rückschlagventils im Umfang des axialen Spiels gegeben sein, wodurch eine erhöhte Toleranz beim Einbau des Rückschlagventils in die Anschlusseinrichtung gegeben ist.

Vorteilhafterweise ist vorgesehen, dass die Schnittstelle des Ventilgehäuses und des Grundgehäuses radial zueinander verdrehbar geführt sind. Dies weist den Vorteil auf, dass eine Vorzugsrichtung beim Einbau des Rückschlagventils in die Anschlussstelle nicht erforderlich ist. Vielmehr kann dieses beliebig in jeder Richtung ausgerichtet in die Anschlussstelle der Anschlusseinrichtung eingesetzt werden.

Eine weitere vorteilhafte Ausgestaltung des Rückschlagventils sieht vor, dass die Schnittstelle Verbindungselemente umfasst, die eine lösbare Verbindung bilden. Dadurch kann auch ein Teil des Rückschlagventils, beispielsweise das Ventilgehäuse und/oder das Ventilschließglied, die einem Verschleiß unterliegen, ausgetauscht werden.

Die Verbindungselemente des Rückschlagventils sind vorteilhafterweise aus einer umlaufenden Nut und aus wenigstens einem, vorzugsweise mehreren Rasthaken, gebildet. Dabei ist bevorzugt vorgesehen, dass die umlaufende Nut in dem Grundgehäuse vorgesehen ist und der zumindest eine Rasthaken an dem Ventilgehäuse ausgebildet ist. Eine Vertauschung kann auch möglich sein. Zur Ausbildung des Spiels ist dabei bevorzugt vorgesehen, dass der Rasthaken, ausgehend von der Hinterschneidung bis zum stirnseitigen Ende des Rasthakens eine Länge aufweist, die kleiner als die Breite der umlaufenden Nut ausgebildet ist. Dadurch kann in einfacher Weise eine Bestimmung und Beschränkung des axialen Spiels ermöglicht sein.

Die Verbindungselemente zur Bildung der Schnittstelle weisen bevorzugt jeweils aufeinander zu gerichtete Führungsflächen auf, wobei eine Führungsfläche an dem Grundgehäuse sich von der umlaufenden Nut aus in Richtung auf das Ventilgehäuse erstreckt und die an der Hinterschneidung angrenzende Führungsfläche des Verbindungselementes sich in der Nut erstreckt. Dadurch kann die Schnittstelle belastbarer ausgebildet sein.

Des Weiteren ist bevorzugt vorgesehen, dass an dem Ventilgehäuse zum Grundgehäuse weisend ein umlaufender Führungsflansch vorgesehen ist, der vorzugsweise durch das wenigstens eine Verbindungselement, insbesondere durch den wenigstens einen Rasthaken, in radialer Richtung gesehen unterbrochen ist. Dadurch ist die Funktion des Rasthakens getrennt von dem Führungsflansch, wobei vorzugsweise sowohl das Verbindungselement als auch der Führungsflansch an einer inneren Umfangswand des Grundgehäuses angreifen können.

Vorzugsweise ist das Ventilgehäuse mit dem dem Ventilsitz gegenüberliegenden Führungsflansch an der Führungsfläche des Grundgehäuses axial verschiebbar und/oder radial verdrehbar geführt. Dies ermöglicht eine sichere Positionierung des Ventilgehäuses zum Grundgehäuse. Gleichzeitig kann dadurch auch eine gesicherte Aufnahme des Ventilschließgliedes im Regulierraum vorgesehen sein, der zwischen dem Ventilgehäuse und dem Grundgehäuse ausgebildet ist.

Die Größe des Spiels bzw. der axialen Verschiebbarkeit zwischen dem Ventilgehäuse und dem Grundkörper ist bevorzugt wie folgt ausgebildet. Ein Abstand zwischen einer an dem Grundgehäuse vorgesehenen Montagefläche oder eines Montageabschnitts und einer dem Grundgehäuse gegenüberliegenden Stirnfläche des Ventilgehäuses umfasst bei einer Anordnung der Verbindungselemente in der Schnittstelle mit Spiel zueinander eine Einbaulänge A, die kleiner als ein Einbaumaß E in der Anschlussstelle der Anschlusseinrichtung ist. Bei der Anordnung des Grundgehäuses zum Ventilgehäuse ohne Spiel, also bei einer auseinander gezogenen Position des Ventilgehäuses zum Grundgehäuse, weist das Rückschlagventil, ausgehend von der Montagefläche bzw. des Montageabschnitts des Grundgehäuses bis zur Stirnfläche des Ventilgehäuses, eine Größe auf, die größer als das Einbaumaß E ist.

Eine weitere bevorzugte Ausgestaltung des Rückschlagventils sieht vor, dass das Ventilgehäuse die in Längsachse zum Ventilgehäuse ausgerichtete Ventilöffnung umfasst und von dieser ausgehend einen radialen Wandabschnitt umfasst, an dessen der Ventilöffnung gegenüberliegendem Ende zumindest das Ventilelement für die Schnittstelle vorgesehen ist. Das Ventilgehäuse ist somit käfigartig ausgebildet. Innerhalb dem käfigartigen Ventilgehäuse ist das Ventilschließglied entlang der Längsachse des Ventilgehäuses verschiebbar geführt.

Des Weiteren ist bevorzugt vorgesehen, dass in dem radialen Wandabschnitt des Ventilgehäuses Durchbrechungen vorgesehen sind, die länglich ausgebildet sind und sich in Umfangsrichtung des Wandabschnittes erstrecken, wobei zwischen den Durchbrechungen Stege vorgesehen sind, welche den Ventilsitz mit dem zumindest einen Verbindungselement des Ventilgehäuses verbindet. Diese Anordnung ermöglicht, dass durch das Rückschlagventil eine Umlenkung einer Strömung eines Mediums um 90° ermöglicht ist, indem beispielsweise axial zum Ventilgehäuse die Strömung zugeführt wird und in radialer Richtung durch die Durchbrechung im Ventilgehäuse abgeführt werden kann.

Vorteilhafterweise ist an dem Ventilschließglied ein Führungsstab oder Führungsabschnitt vorgesehen, der sich bis in das Grundgehäuse erstreckt und in dem Grundgehäuse längsverschieblich geführt ist. Vorteilhafterweise ist zwischen dem Grundgehäuse und dem Ventilschließglied das Rückstellelement vorgesehen. Dadurch kann in einfacher Weise das Rückstellelement in einer Grundposition oder Schließposition vorgesehen sein.

Vorteilhafterweise kann das Rückschlagventil aus nur vier Bauteilen bestehen, also dem Grundgehäuse, dem Ventilgehäuse, dem Ventilschließglied und dem Rückstellelement. Bevorzugt genügen zwei oder drei Dichtungselemente, insbesondere Dichtungsringe, wobei jeweils eines am Ventilgehäuse und eines am Grundgehäuse vorgesehen ist, um die jeweiligen Anschlussstellen an der Anschlussstelle abzudichten und gegebenenfalls ein Dichtungselement am Ventilschließglied.

Das Ventilschließglied weist bevorzugt gegenüberliegend zu der an dem Ventilschließglied anliegenden Schließfläche Führungslamellen auf, welche sich parallel zur Längsachse des Ventilschließgliedes erstrecken. Durch diese Führungslamellen kann zusätzlich zum Führungselement, welches im Grundgehäuse verschiebbar aufgenommen wird, eine Führung des Ventilschließgliedes ermöglicht sein. Insbesondere bei einer axialen Zuführung der Strömung und einer Umlenkung in radiale Richtung kann dadurch eine exzentrische Ausrichtung des Ventilschließgliedes zur Längsachse bzw. zur Öffnung des Ventilgehäuses verhindert werden.

Vorteilhafterweise ist vorgesehen, dass die Führungslamellen eine radial nach außen weisende Stirnfläche aufweisen, deren axiale Länge größer als die Breite der Durchbrechungen ist. Dadurch erstrecken sich die Führungslamellen in einer Ausgangsposition des Ventilschließgliedes über die Durchbrechungen in dem radialen Wandabschnitt hinweg. Dadurch kann eine gesicherte Führung des Ventilschließgliedes innerhalb des Ventilgehäuses unabhängig von der Öffnungsbewegung gegeben sein. Zudem kann durch die Höhe der Führungslamelle am Ventilschließglied eine Öffnungsbewegung des Ventilschließglieds innerhalb des Ventilgehäuses begrenzt sein, indem die Führungslamelle am Grundkörper anliegt.

Eine weitere bevorzugte Ausgestaltung des Rückschlagventils sieht vor, dass der Ventilsitz das Ventilgehäuse eine zur Ventilöffnung weisende Auflagefläche aufweist, an welcher das Ventilschließglied in einer Schließposition anliegt und eine Dichtfläche aufweist, an welcher ein Dichtelement des Ventilschließgliedes anliegt, wobei die Auflagefläche und die Dichtfläche getrennt zueinander ausgebildet sind. Vorteilhafterweise können die Auflagefläche und die Dichtfläche unmittelbar aneinandergrenzen. Diese Anordnung weist den Vorteil auf, dass die Schließbewegung des Ventilschließgliedes und die Schließposition durch die Auflagefläche begrenzt ist. Das Dichtelement des Ventilschließglieds kann an der Dichtfläche mit einer Dichtwirkung anliegen, ohne dass die gesamte Schließkraft des Ventilschließgliedes auf das Dichtelement wirkt. Dadurch kann eine Leckage oder ein vorzeitiger Verschleiß des Dichtelementes durch Einsetzen des Materials des Dichtelementes entgegengewirkt werden.

Des Weiteren ist bevorzugt vorgesehen, dass die Auflagefläche des Ventilsitzes in einem Winkel von 10° bis 90° zur Längsachse des Ventilgehäuses ausgerichtet ist. Die Dichtfläche ist bevorzugt in einem Winkel von 90° zur Längsachse des Ventilgehäuses oder kleiner ausgebildet. Bevorzugt ist die Dichtfläche in einem Winkel ausgerichtet, der kleiner oder größer als der Winkel der Auflagefläche ist, um den Ventilsitz auszubilden.

Sofern der Winkel zur Ausrichtung der Dichtfläche kleiner als der der Auflagefläche ist, kann bevorzugt eine radiale Abdichtung des Ventilsitzes erzielt werden. Sofern der Winkel zur Ausrichtung der Dichtfläche größer als der Winkel der Auflagefläche ist, kann auch eine axial wirkende Abdichtung ausgebildet werden.

Bevorzugt kann durch einen axialen Abstand der Dichtfläche zur Auflagefläche am Ventilsitz ein Anpressdruck des Dichtelementes des Ventilschließgliedes einstellbar sein. Dies ermöglicht zum einen eine abdichtende Positionierung des Dichtelementes am Ventilschließglied und zum anderen, dass keine zu hohe Anpresskraft auf das Dichtelement in der Schließposition des Ventilschließgliedes im Ventilsitz wirkt, um eine Fließen oder Setzen des Dichtelementes zu vermeiden.

Am Ventilschließglied kann ein Dichtelement aufgespannt, aufgeklemmt oder aufgepresst vorgesehen sein. Bevorzugt kann bei einer radialen Abdichtung die Dichtung in einer umlaufenden Nut, beispielsweise als ein Dichtring, eingesetzt oder eingesteckt werden. Alternativ kann auch ein Aufvulkanisieren des Dichtelementes am Ventilschließglied vorgesehen sein. Ebenso kann das Ventilschließglied als ein Zwei-Komponenten-Bauteil ausgebildet sein, an welchem ein Dichtelement aus einem Elastomer einteilig mit dem Ventilschließglied aus einem thermoplastischen Kunststoff hergestellt ist. Bei einem solchen Zwei-Komponenten-Bauteil kann insbesondere eine in axialer Richtung wirkende Dichtung ausgebildet sein. Des Weiteren kann das Dichtelement an das Ventilschließglied angeklebt und/oder durch Formschluss gehalten sein.

Das Ventilgehäuse und das Ventilschließglied sind bevorzugt aus Kunststoff ausgebildet. Das Grundgehäuse kann beispielsweise auch aus Kunststoff oder einem metallischen Material, insbesondere Leichtmetall oder dergleichen, ausgebildet sein. Bevorzugt kann Aluminium oder eine Aluminiumlegierung oder dergleichen eingesetzt werden.

Die der Erfindung zugrundeliegende Aufgabe wird des Weiteren durch eine Anschlusseinrichtung für ein Rückschlagventil, nach einer der vorbeschriebenen Ausführungsformen, gelöst, bei welchen die Anschlussstelle im Basiskörper der Anschlusseinrichtung eine Zuführöffnung sowie eine Auslassöffnung umfasst, wobei zwischen der Zuführöffnung und der Auslassöffnung ein erster Steckabschnitt vorgesehen ist, in welchem das Ventilgehäuse des Rückschlagventils positionierbar ist und zwischen der Zuführöffnung und einer Anschlussöffnung der Anschlussstelle ein zweiter Steckabschnitt vorgesehen ist, in welchem das Grundgehäuse des Rückschlagventils fixierbar ist, wobei der Grundkörper des Rückschlagventils mit einem lösbaren Befestigungsmittel im zweiten Steckabschnitt in axialer Richtung zur Anschlussstelle fixiert ist und das Ventilgehäuse in dem ersten Steckabschnitt in axialer Richtung verschiebbar positioniert ist. Durch das Rückschlagventil, bei welchem das Ventilgehäuse und das Grundgehäuse mit axialem Spiel, insbesondere in der Schnittstelle zwischen dem Grundgehäuse und dem Ventilgehäuse, zueinander verschiebbar angeordnet sind, kann bei einer solchen Anschlussstelle ein einfacher und sicherer Einbau ermöglicht werden. Toleranzen zwischen dem ersten und zweiten Steckabschnitt in der Anschlussstelle der Anschlusseinrichtung und/oder bei dem Einbaumaß des Rückschlagventils können insbesondere in axialer Richtung ausgeglichen werden.

Bei der Anschlusseinrichtung ist bevorzugt vorgesehen, dass das Rückschlagventil in dem zweiten Steckabschnitt durch ein lösbares Befestigungselement fixiert ist. Das Grundgehäuse liegt mit einer Anschlagfläche an einer Schulter des zweiten Steckabschnitts auf, und durch das lösbare Befestigungselement, welches der Anschlagfläche gegenüberliegende an einem Montageabschnitt des Grundgehäuses angreift, wird das Grundgehäuse zu dieser Schulter fixiert gehalten. Für die einfache Montage kann das Grundgehäuse mit geringem Spiel in dem zweiten Steckabschnitt angeordnet sein. Dies ermöglicht eine einfache Fixierung des Rückschlagventils in der Anschlussstelle. Insbesondere durch die Ausgestaltung des lösbaren Befestigungselementes als Sicherungsring kann eine schnelle Montage und Sicherung des Rückschlagventils in der Anschlussstelle gegeben sein. Dieses lösbare Befestigungselement kann beispielsweise als ein Sicherungsring oder Springring ausgebildet sein. Dies ermöglicht eine einfache Montage. Des Weiteren kann auch ein Befestigungsflansch mit einem Gewinde, einer Dreh-/Rastverbindung, ein Bajonettverschluss oder dergleichen als lösbares Befestigungselement vorgesehen sein.

Des Weiteren ist bevorzugt vorgesehen, dass zwischen dem Grundgehäuse und dem zweiten Steckabschnitt sowie zwischen dem Ventilgehäuse und dem ersten Steckabschnitt jeweils ein Dichtungselement vorgesehen ist. Dieses Dichtungselement ist vorzugsweise in radialer Richtung wirkend am Grundgehäuse und Ventilgehäuse ausgerichtet. Dadurch ist zum einen eine sichere Abdichtung zwischen dem Regulierraum und der Auslassöffnung einerseits und der Zuführöffnung und dem Regulierraum andererseits des Rückschlagventils ermöglicht. Zusätzlich kann ein einfaches Einsetzen in die Anschlussstelle ermöglicht sein.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht eines Rückschlagventils,
Figur 2 eine Explosionsansicht des Rückschlagventils,
Figur 3 eine perspektivische Ansicht eines Ventilschließglieds,
Figur 4 eine schematische Schnittansicht des Rückschlagventils in einer Schließposition,
Figur 5 eine schematische Schnittansicht des Rückschlagventils in einer geöffneten Position,
Figur 6 eine schematische Teilansicht einer alternativen Ausbildung des Ventilschließgliedes im Ventilgehäuse,
Figur 7 eine schematische Schnittansicht des Rückschlagventils in einer Anschlussstelle einer Anschlussvorrichtung in einer Schließposition, und
Figur 8 eine schematische Schnittansicht des Rückschlagventils in der Anschlussstelle der Anschlusseinrichtung in einer Arbeitsposition.

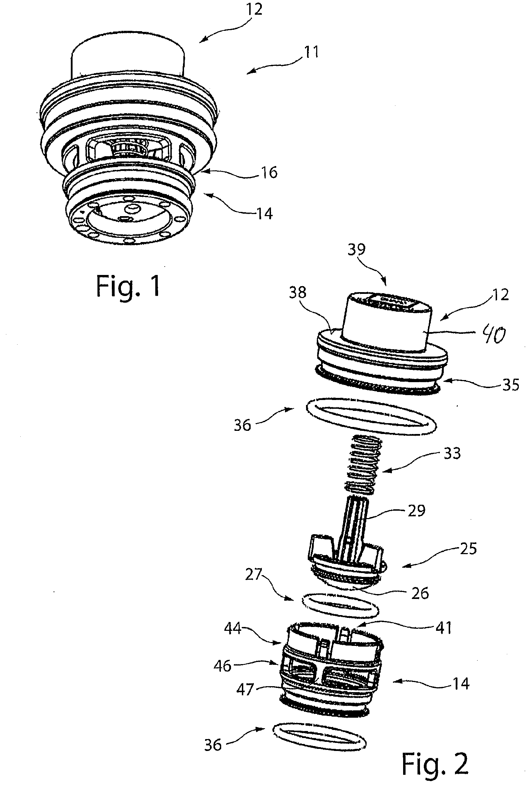

In Figur 1 ist ein Rückschlagventil 11 in einer perspektivischen Ansicht dargestellt. Dieses Rückschlagventil 11 umfasst ein Grundgehäuse 12 sowie ein Ventilgehäuse 14. Das Ventilgehäuse 14 ist über eine Schnittstelle 16 mit dem Grundgehäuse 12 verbunden.

In Figur 2 ist eine Explosionsansicht des Rückschlagventils 11 gemäß Figur 1 dargestellt. Aus dieser Explosionsansicht gehen die einzelnen Komponenten des Rückschlagventils 11 und der Aufbau hervor.

Das Ventilgehäuse 14 ist vorteilhafterweise einteilig ausgebildet. Dieses Ventilgehäuse 14 weist bevorzugt einen käfigartigen Aufbau auf. An einer Stirnfläche 21 des Ventilgehäuses 14, welche dem Grundgehäuse 12 gegenüberliegt, ist eine Ventilöffnung 22 vorgesehen, die von einem Ventilsitz 23 umgeben ist. Im Ventilgehäuse 14 ist ein Ventilschließglied 25 vorgesehen, welches die Ventilöffnung 22 öffnet und schließt. Das Ventilschließglied 25 weist eine Schließfläche 26 auf. An diese Schließfläche 26 angrenzend ist ein Dichtungselement 27 vorgesehen. Bevorzugt ist dieses Dichtungselement 27 in einer radial umlaufenden Nut des Ventilschließgliedes 25 vorgesehen.

Das Ventilschließglied 25 umfasst des Weiteren einen Führungsabschnitt 29, der in einer Führungsbohrung 31 im Grundgehäuse 12 geführt ist. Ein Rückstellelement 33 ist zwischen dem Ventilschließglied 25 und dem Grundgehäuse 12 vorgesehen. Dieses Rückstellelement 33 wird bevorzugt durch den Führungsabschnitt 29 geführt und zwischen dem Ventilschließglied 25 und dem Grundgehäuse 12 gehalten.

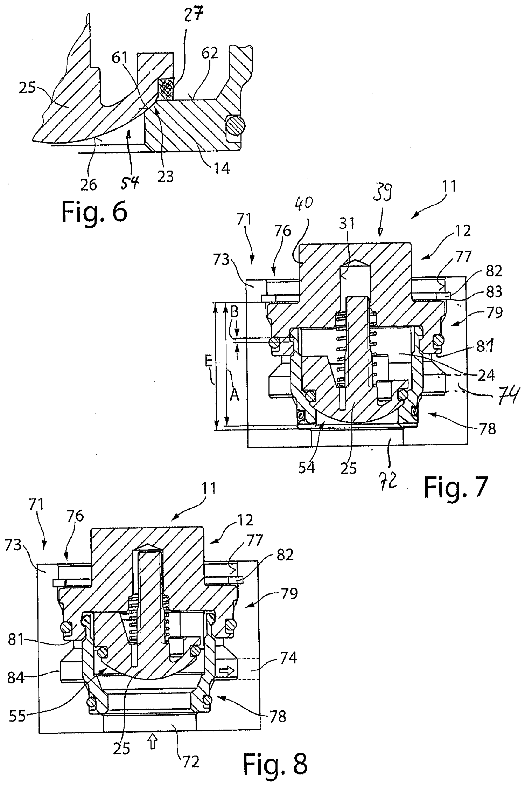

Das Grundgehäuse 12 umfasst eine außen umlaufende Nut 35, welche zur Aufnahme eines Dichtungselementes 36 vorgesehen ist. An diese Nut 35 angrenzend und zum Ventilgehäuse 14 weisend ist eine Anschlagfläche 37 am Grundgehäuse 12 vorgesehen. Dieser gegenüberliegend ist eine Montagefläche bzw. Montageabschnitt 38 am Grundgehäuse 12 angeordnet. Das Grundgehäuse 12 ist beispielsweise zylindrisch ausgebildet. An einer äußeren Stirnseite 39 kann beispielsweise eine Fläche vorgesehen sein, die zur Anordnung, Aufnahme oder Einbringung von Informationen dient, wie beispielsweise eine Codierung, eine Bestellnummer, Prüfnummer oder dergleichen. Die äußere Stirnseite 39 kann bündig zur Montagefläche 38 ausgerichtet sein oder an einem zylindrischen Gehäuseabschnitt 40 vorgesehen sein, der sich vorzugsweise gegenüber der Montagefläche 38 erhebt. Der zylindrische Gehäuseabschnitt 40 an dem Grundgehäuse 12 weist bevorzugt einen Durchmesser von 20 % bis 80 % von der Größe eines Durchmessers einer Öffnung 77 in einer Anschlussstelle 76 einer Anschlusseinrichtung 71 (Figur 7) auf.

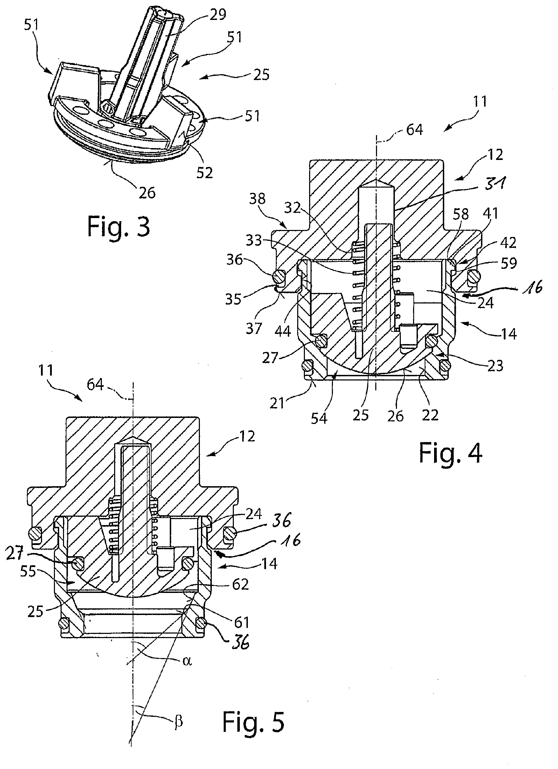

Die zwischen dem Grundgehäuse 12 und Ventilgehäuse 14 ausgebildete Schnittstelle 16 umfasst Verbindungselemente 41, 42. Eines der Verbindungselemente 41 ist durch einen, vorzugsweise mehrere, Rasthaken ausgebildet, welche am Ventilgehäuse 14 vorgesehen sind. Eines der Verbindungselemente 42 der Schnittstelle 16 ist durch eine innen umlaufende Nut 42 am Grundgehäuse 12 ausgebildet, wie dies in Figur 4 dargestellt ist. Dadurch kann das Ventilgehäuse 14 in das Grundgehäuse 12 eingesteckt werden, und die Rasthaken 41 greifen in die Nut 42 ein. Vorteilhafterweise kann die Schnittstelle 16 als lösbare Verbindung ausgebildet sein.

Zur zentrischen Positionierung des Ventilgehäuses 14 zum Grundgehäuse 12 ist an einer Stirnfläche 21 des Ventilgehäuses 14 gegenüberliegend ein Führungsflansch 44 vorgesehen. Dieser Führungsflansch 44 ist in radialer Richtung abschnittsweise ausgebildet. Vorteilhafterweise sind zwischen sich radial umlaufend erstreckenden Führungsflächen des Führungsflansches 44 die Rasthaken 41 vorgesehen.

Zwischen den Führungsflächen 44 und der Stirnfläche 21 des Ventilgehäuses 14 sind bevorzugt in radialer Richtung sich erstreckende Durchbrechungen 46 vorgesehen. Zwischen den Durchbrechungen 46 erstrecken sich Stege 47, welche den Führungsabschnitt 44 und den Ventilsitz 23 auf Abstand positionieren.

Durch dieses Ventilgehäuse 14 wird ermöglicht, dass in axialer Richtung ein Medium durch die Ventilöffnung 22 einströmt und darauffolgend in radialer Richtung durch die Durchbrechungen 46 seitlich abströmt. Das Ventilgehäuse 14 mit den zuvor beschriebenen Komponenten ist bevorzugt einteilig als Spritzgussteil ausgebildet. Das Grundgehäuse 12 ist vorzugsweise ebenfalls einteilig ausgebildet. Dies kann aus Kunststoff oder ein Metall, insbesondere Leichtmetall, bestehen.

**In** Figur 3 ist perspektivisch das Ventilschließglied 25 dargestellt. An einer der Schließfläche 26 gegenüberliegenden Seite sind Führungslamellen 51 vorgesehen. Beispielsweise sind drei Führungslamellen 51 am Ventilschließglied 25 - vorzugsweise gleichmäßig über den Umfang verteilt - vorgesehen. Die Führungslamellen 51 weisen radial nach außen weisende Stirnflächen 52 auf. Diese Stirnflächen 52 liegen an einer Innenseite des Ventilgehäuses 14 an und führen das Ventilschließglied 25 während einer Öffnungs- und Schließbewegung. Die Länge der Stirnflächen 52 umfasst eine Höhe, welche zumindest der Breite der Durchbrechung 46 in axialer Richtung erstreckt. Dadurch kann ausgehend von einer Schließposition 54 (Figur 4) des Ventilschließgliedes 25 bis hin zu einer Öffnungsbewegung eine axiale Führung des Ventilschließgliedes 25 erfolgen, ohne dass eine Verhakung in den Durchbrechungen 46 erfolgt.

**In** Figur 4 ist eine schematische Schnittansicht des Rückschlagventils 11 gemäß Figur 1 in einer zusammengebauten Anordnung dargestellt. Das Ventilschließglied 25 ist in einer Schließposition 54 vorgesehen. Die Figur 5 zeigt eine schematische Schnittansicht des Rückschlagventils 11, bei welcher das Ventilschließglied 55 in einer Öffnungsposition 55 dargestellt ist. Zwischen dem Grundgehäuse 12 und dem Ventilgehäuse 14 ist ein Regulierraum 24 gebildet. Innerhalb des Regulierraumes 24 ist das Ventilschließglied 25 zwischen einer Schließposition 54 und einer Öffnungsposition 55 ansteuerbar. Die maximale Öffnungsposition 55 des Ventilschließgliedes 25 kann durch die Länge der Führungslamellen 51 und/oder des Führungsabschnitts 29 begrenzt sein.

Das Rückstellelement 33 ist bevorzugt durch einen gegenüber der Führungsbohrung 31 im Grundgehäuse 12 vergrößerten Bohrungsabschnitt 32 aufgenommen und geführt. Die Tiefe des Bohrungsabschnitts 32 kann zur Bestimmung einer Vorspannung des Rückstellelements 33 entsprechend ausgebildet sein.

Die Schnittansicht gemäß den Figuren 4 und 5 zeigt die Schnittstelle 16, welche vorzugsweise lösbar ist.

Das erste und zweite Verbindungselement 41, 42 der Schnittstelle 16 sind mit axialem Spiel zueinander ausgerichtet. Hierfür ist vorgesehen, dass der Rasthaken 41 einen Abstand zwischen einer Stirnseite 58 des Rasthakens 41 und einer Hinterschneidung 59 des Rasthakens 41 aufweist, der kleiner als die Breite der umlaufenden Nut 42 ist. Dadurch ist das Ventilgehäuse 14 mit einem axialen Spiel zum Grundgehäuse 12 angeordnet.

Das Ventilgehäuse 14 weist einen Ventilsitz 23 auf, der eine Auflagefläche 61 und eine Dichtfläche 62 umfasst. An der Auflagefläche 61 liegt die Schließfläche 26 des Ventilschließgliedes 25 in der Schließposition 54 an. Benachbart zur Auflagefläche 61 bzw. in Strömungsrichtung der Auflagefläche 61 nachfolgend ist die Dichtfläche 62 vorgesehen, an welcher in der Schließposition 54 das Dichtelement 27 des Ventilschließgliedes 25 anliegt. Die Auflagefläche 61 und Dichtfläche 62 sind getrennt zueinander ausgebildet. Diese grenzen bevorzugt aneinander an. Durch die Auflagefläche 61 nimmt das Ventilschließglied 25 eine definierte Schließposition 54 ein. Durch die axiale Ausrichtung der Dichtfläche 62 zur Auflagefläche 61 kann das Dichtelement 27 mit einem vorbestimmten Anpressdruck an der Dichtfläche 62 anliegen. Dieser Anpressdruck ist geringer als die Anlagekraft des Ventilschließgliedes 25 in der Auflagefläche 61. Eine Überbeanspruchung oder ein Setzen des Dichtelementes 27 wird dabei vermieden.

Bei der Ausführungsform gemäß Figur 5 ist vorgesehen, dass die Auflagefläche 61 in einem Winkel α zur Längsachse 64 des Ventilgehäuses 14 beziehungsweise Grundgehäuse 12 ausgerichtet ist, die beispielsweise in einem Bereich von 10° bis 90° liegt. Die Dichtfläche 62 ist in einem Winkel β zur Längsachse 64 des Ventilgehäuses 14 ausgerichtet, der kleiner als der Winkel α ist. Bei einer solchen Anordnung kann das Dichtelement 27 in radialer Richtung dichtend wirken.

**In** Figur 6 ist eine schematische Schnittansicht einer alternativen Ausführungsform des Ventilschließgliedes 25 zum Ventilsitz 23 dargestellt. Bei dieser Ausführungsform ist vorgesehen, dass die Dichtfläche 62 in einem Winkel β ausgebildet ist, der größer als der Winkel α der Auflagefläche 61 zur Längsachse 64 des Ventilgehäuses 14 ist. Bevorzugt ist die Dichtfläche 62 rechtwinklig zur Längsachse 64 des Ventilgehäuses 14 ausgerichtet. Am Ventilschließglied 25 greift das Dichtelement 27 an einer umlaufenden Schulter an, sodass eine Axialabdichtung gegeben ist.

Bei dieser Ausführungsform des Ventilschließgliedes 25 und des Ventilsitzes 23 kann das Dichtelement 27 an das Ventilschließglied 25 als Zwei-Komponenten-Spritzgussteil ausgebildet sein. Auch kann das Dichtelement 27 angeklebt oder durch Formschluss daran fixiert sein.

**In** Figur 7 ist das Rückschlagventil 11 in einer Anschlusseinrichtung 71 angeordnet. Diese Anschlusseinrichtung 71 kann zumindest eine Zuführöffnung 72 und zumindest eine Abführöffnung 74 aufweisen. Zwischen der Zuführöffnung 72 und der Abführöffnung 74 ist eine Anschlussstelle 76 vorgesehen, durch welche ein Medium hindurchgeführt wird. In die Anschlussstelle 76 ist das Rückschlagventil 11 über eine Öffnung 77 einsetzbar und zur Anschlussstelle 76 fixierbar. Die Anschlussstelle 76 weist bevorzugt einen ersten Steckabschnitt 78 auf, in welchem das Ventilgehäuse 14 positioniert wird. Des Weiteren umfasst die Anschlussstelle 76 einen zweiten Steckabschnitt 79, in welchem das Grundgehäuse 12 positioniert ist. Beim Einsetzen des Rückschlagventils 11 in die Anschlussstelle 76 liegt bevorzugt die Anschlagfläche 37 des Grundgehäuses 12 an einer Schulter 81 des zweiten Steckabschnittes 79 an oder auf. Darauffolgend wird ein lösbares Befestigungsmittel 82 in die Anschlussstelle 86 eingebracht. Dieses lösbare Befestigungsmittel 82 greift an der Montagefläche 38 des Grundgehäuses 12 an und fixiert das Rückschlagventil 11 in der Anschlussstelle 76. Das lösbare Befestigungselement 82 kann beispielsweise als ein Sicherungsring ausgebildet sein, der in einer umlaufenden Nut 83 befestigbar ist.

Das Rückschlagventil 11 umfasst bevorzugt ein Einbaumaß E, welches sich durch einen Abstand von der Montagefläche 38 des Grundgehäuses 12 bis zur Stirnfläche 21 des Ventilgehäuses 14 bestimmt. Darüber hinaus ist zwischen dem ersten und zweiten Verbindungselement 41, 42 an der Schnittstelle 16 ein axiales Spiel B gegeben. Um die Länge des axialen Spiels B kann die Einbaulänge A vergrößert oder verlängert werden.

Für die Anschlussstelle 76 ist ein Einbaumaß E vorgesehen, welches den ersten und zweiten Steckabschnitt 78, 79 umfasst. Die Einbaulänge A des Rückschlagventils 11 ist bei einer Positionierung des Ventilgehäuses 14 zum Grundgehäuse 12 mit Spiel B kleiner als das Einbaumaß E. Dadurch ist eine vereinfachte Montage des Rückschlagventils 11 zur Anschlussstelle 76 gegeben. Sobald auf das Rückschlagventil 11 ein Druck durch das Medium wirkt, ist dieses Ventilgehäuse 14 axial gegenüber dem Grundgehäuse 12 aufgrund des Spieles B verschiebbar. Dabei kann vorgesehen sein, dass die Stirnfläche 21 des Ventilgehäuses 11 am stirnseitigen Ende des ersten Steckabschnitts 78 anliegt, jedoch das erste und zweite Verbindungselement 41, 42 noch mit geringem Spiel zueinander positioniert sind oder ohne Spiel zueinander positioniert sind. Dadurch können Toleranzen des ersten Steckabschnitts 78 einerseits und weitere Toleranzen in der Positionierung zum zweiten Steckabschnitt 79 ausgeglichen werden.

Aus den Figuren 7 und 8 geht hervor, dass sowohl das Grundgehäuse 12 als auch das Ventilgehäuse 14 jeweils durch ein Dichtelement 36 zum ersten und zweiten Anschlussabschnitt 78, 79 abdichtend angeordnet sind. Dadurch erfolgt eine Durchströmung des Rückschlagventils 11 von der Zuführöffnung 72 in dem Regulierraum 24 des Ventilgehäuses 14 nach dem Überführen des Ventilschließglieds 25 aus der Schließposition 54 in die Öffnungsposition 55. Anschließend strömt das Medium durch die Durchbrechungen 46 im Ventilgehäuse 14 in einen Ringkanal 84 in der Anschlussstelle 76 und von dort über die Abführöffnung 74 ab.

## Patentansprüche

1. Rückschlagventil, insbesondere für einen Kälte- oder Wärmekreislauf, welches in einer Anschlussstelle (76) einer Anschlusseinrichtung (71) einsetzbar ist, die eine Zuführöffnung (72) für die Zuführung eines Mediums und eine Auslassöffnung (74) für das Abführen des Mediums aufweist,
- mit einem mehrteiligen Gehäuse (12, 14), welches ein Ventilgehäuse (14) und ein Grundgehäuse (12) umfasst, die über eine Schnittstelle (16) mittels Verbindungselementen (41, 42) miteinander verbindbar sind,
- mit einem zwischen dem Grundgehäuse (12) und dem Ventilgehäuse (14) gebildeten Regulierraum (24), in welchem ein Ventilschließglied (25) vorgesehen ist, welches in einer Schließposition (54) an einem Ventilsitz (23) des Ventilgehäuses (14) anliegt und eine Öffnung (22) im Ventilgehäuse (14) schließt und in eine Arbeitsposition (55) entgegen einer Stellkraft eines Rückstellelementes (33) überführbar ist und die Ventilöffnung (22) freigibt, wobei das Ventilgehäuse (14) und das verschiebbar in dem Regulierraum (24) angeordnete Ventilschließglied (25) in einer gemeinsamen Längsachse (64) liegen,
**dadurch gekennzeichnet,**
- **dass** die Schnittstelle (16) zwischen dem Ventilgehäuse (14) und dem Grundgehäuse (12) ein axiales Spiel (B) umfasst, durch welches der Abstand des Ventilgehäuses (14) und des Grundgehäuses (12) zueinander veränderbar ist, und
- **dass** ein Abstand zwischen einem an dem Grundgehäuse (12) vorgesehenen Montageabschnitt (38), durch welchen das Grundgehäuse (12) durch ein lösbares Befestigungselement (82) zur Anschlussstelle (76) fixierbar ist, und einer dem Grundgehäuse (12) gegenüberliegenden Stirnfläche (21) am Ventilgehäuse (14) bei einer Anordnung des Grundgehäuses (12) zum Ventilgehäuse (14) mit Spiel (B) eine Einbaulänge (A) aufweist, die kleiner als ein Einbaumaß (E) in der Anschlussstelle (76) ist und bei der Anordnung des Grundgehäuses (12) zum Ventilgehäuse (14) ohne Spiel (B) das Grundgehäuse (12) und das Ventilgehäuse (14) eine Länge aufweisen, die gleich oder größer als das Einbaumaß (E) der Anschlussstelle (76) ist.

2. Rückschlagventil nach Anspruch 1, **dadurch gekennzeichnet, dass** das Grundgehäuse (12) und das Ventilgehäuse (14) durch das axiale Spiel der Schnittstelle (16) entlang der Längsachse (64) relativ zueinander verschiebbar geführt sind und vorzugsweise radial zueinander verdrehbar geführt sind.

3. Rückschlagventil nach einem der vorhergehenden Ansprüche, **dadurch gekennzeichnet, dass** die Schnittstelle (16) Verbindungselemente (41, 42) umfasst, die eine lösbare Verbindung zwischen dem Grundgehäuse (14) und dem Ventilgehäuse (12) bilden.

4. Rückschlagventil nach Anspruch 3, **dadurch gekennzeichnet, dass** das erste Verbindungselement (42), welches die Schnittstelle (16) bildet, als eine umlaufende Nut ausgebildet ist, und das zweite Verbindungselement (41) aus wenigstens einem, vorzugsweise mehreren, Rasthaken besteht, welches in das erste Verbindungselement (42) eingreift, und vorzugsweise wobei der als zweites Verbindungselement (41) ausgebildete Rasthaken ausgehend von einer Hinterschneidung (59) an dem Rasthaken bis zum stirnseitigen Ende (58) des Rasthakens eine Länge umfasst, die kleiner als die Breite der umlaufenden Nut (42) ist.

5. Rückschlagventil nach einem der Ansprüche 3 oder 4, **dadurch gekennzeichnet, dass** die Verbindungselemente (41, 42) jeweils aufeinander zu gerichtete Führungsflächen aufweisen, wobei eine Führungsfläche an dem Grundgehäuse (12) sich von der Nut (42) in axialer Richtung auf das Ventilgehäuse (14) erstreckt und die an der Hinterschneidung (59) des Rasthakens (41) angeordnete Führungsfläche sich in der Nut (42) erstreckt.

6. Rückschlagventil nach einem der vorhergehenden Ansprüche, **dadurch gekennzeichnet, dass** an dem Ventilgehäuse (14) zum Grundgehäuse (12) weisend ein umlaufender Führungsflansch (44) vorgesehen ist, und vorzugsweise das Ventilgehäuse (14) mit dem Führungsflansch an der Führungsfläche (44) des Grundgehäuses (12) axial verschiebbar und/oder radial verdrehbar geführt ist, und vorzugsweise der Führungsflansch (44) durch wenigstens ein als Rasthaken ausgebildetes Verbindungselement (41) unterbrochen ist.

7. Rückschlagventil nach einem der Ansprüche 1 bis 6, **dadurch gekennzeichnet, dass** das Ventilgehäuse (14) die in Längsachse (64) zum Ventilgehäuse (14) ausgerichtete Ventilöffnung (22) umfasst, und an dieser Ventilöffnung (22) sich ein radialer Wandabschnitt anschließt, an dessen der Ventilöffnung (22) gegenüberliegendem Ende das zumindest eine Verbindungselement (41) der Schnittstelle (16) vorgesehen ist und vorzugsweise in dem radialen Wandabschnitt des Ventilgehäuses (14) Durchbrechungen (46) vorgesehen sind, die länglich ausgebildet sind und sich in Umfangsrichtung erstrecken und vorzugsweise zwischen den Durchbrechungen (46) Stege (47) sich erstrecken, welche den die Ventilöffnung (22) umgebenden Ventilsitz (23) des Ventilgehäuses (14) mit den Verbindungselementen (41, 42) verbindet.

8. Rückschlagventil nach einem der vorhergehenden Ansprüche, **dadurch gekennzeichnet, dass** an einem Ventilschließglied (25) ein Führungsabschnitt (29) vorgesehen ist, der sich in das Grundgehäuse (12) erstreckt und darin längsverschieblich geführt ist und vorzugsweise zwischen dem Ventilschließglied (25) und dem Grundgehäuse (12) das Rückstellelement (33) unter einer Vorspannkraft vorgesehen ist und/oder dass das Ventilschließglied (25) gegenüberliegend zur Schließfläche (26) zumindest eine Führungslamelle (51) aufweist, welche sich parallel zur Längsachse (64) des Ventilgehäuses (14) erstreckt und vorzugsweise die Führungslamelle (51) eine radial nach außen weisende Stirnfläche (52) aufweist, deren axiale Länge größer als die Breite der Durchbrechung (46) im radialen Wandabschnitt ist.

9. Rückschlagventil nach einem der vorhergehenden Ansprüche, **dadurch gekennzeichnet, dass** der Ventilsitz (23) des Ventilgehäuses (14) eine Auflagefläche (61) aufweist, an welcher das Ventilschließglied (25) in seiner Schließposition (54) aufliegt und eine Dichtfläche (62) aufweist, an welcher ein Dichtelement (27) des Ventilschließgliedes (25) anliegt, wobei die Auflagefläche (61) und Dichtfläche (62) getrennt zueinander ausgebildet sind und vorzugsweise aneinandergrenzen und insbesondere das Dichtelement (27) am Ventilschließglied (25) aufgespannt, aufgeklemmt, aufvulkanisiert und/oder aufgeklebt ist.

10. Rückschlagventil nach Anspruch 9, **dadurch gekennzeichnet, dass** die Auflagefläche (61) in einem Winkel α zwischen 10° und 90° zur Längsachse (64) des Ventilgehäuses (14) ausgerichtet ist und vorzugsweise die Dichtfläche (62) in einem Winkel β von 90° oder kleiner zur Längsachse (64) ausgerichtet ist.

11. Rückschlagventil nach einem der Ansprüche 9 oder 10, **dadurch gekennzeichnet, dass** durch einen axialen Abstand der Dichtfläche (62) zur Auflagefläche (61) am Ventilsitz (23) ein Anpressdruck des Dichtelementes (27) des Ventilschließgliedes (25) in der Schließposition (54) einstellbar ist.

12. Rückschlagventil nach einem der vorhergehenden Ansprüche, **dadurch gekennzeichnet, dass** das Ventilgehäuse (14) und/oder das Ventilschließglied (25) aus Kunststoff und das Grundgehäuse (12) aus Kunststoff oder aus einem metallischen Material, insbesondere leichtmetallischem Material, ausgebildet ist.

13. System mit einem Rückschlagventil (11) gemäß einem der vorhergehenden Ansprüche und einer Anschlusseinrichtung (71) für das genannte Rückschlagventil (11), wobei die Anschlusseinrichtung (71) umfasst:
eine Anschlussstelle (76), in welcher das Rückschlagventil (11) von außen über eine Anschlussöffnung (77) der Anschlussstelle (76) einsetzbar ist,
- einen Basiskörper (73), in dem ein Zuführkanal mit einer Zuführöffnung (72) vorgesehen ist, der in die Anschlussstelle (76) im Basiskörper (73) mündet,
eine Auslassöffnung (74), welche die Anschlussstelle (76) mit einem Auslasskanal verbindet,
- einen ersten Steckabschnitt (78) in der Anschlussstelle (76), der zwischen der Zuführöffnung (72) und der Auslassöffnung (74) vorgesehen ist, in welchem das Ventilgehäuse (14) positionierbar ist, und
- einen zweiten Steckabschnitt (79) in der Anschlussstelle (76), der zwischen der Zuführöffnung (72) und der Anschlussöffnung (74) vorgesehen ist, in welchem das Grundgehäuse (12) des Rückschlagventils (11) fixiert ist, wobei das Grundgehäuse (12) mit einem lösbaren Befestigungselement (82) in dem zweiten Steckabschnitt (79) in axialer Richtung zur Anschlussstelle (76) fixiert ist und das Ventilgehäuse (14) in dem ersten Steckabschnitt (78) der Anschlussstelle (76) in axialer Richtung verschiebbar positioniert ist.

14. System nach Anspruch 13, **dadurch gekennzeichnet, dass** das Rückschlagventil (11) in dem zweiten Steckabschnitt (79) durch ein lösbares Befestigungselement (82) fixiert ist, in dem das Grundgehäuse (12) mit der Anschlagfläche (37) an einer Schulter (81) des zweiten Steckabschnitts (79) aufliegt und das lösbare Befestigungselement (82) an einem Montageabschnitt (38) des Grundgehäuses (12), welcher der Anschlagfläche (37) gegenüberliegt, angreift und das Grundgehäuse (12) im zweiten Steckabschnitt (79) fixiert und/oder dass zwischen dem Grundgehäuse (12) und dem zweiten Steckabschnitt (79) sowie zwischen dem Ventilgehäuse (14) und dem ersten Steckabschnitt (78) jeweils ein Dichtungselement (36), vorzugsweise ein in radialer Richtung wirkendes Dichtungselement (36), vorgesehen ist.

## Claims

1. Check valve, in particular for a refrigeration or heating circuit, which is insertable in a connection point (76) of a connection device (71) which has a feed opening (72) for the feed of a medium and an outlet opening (74) for the discharge of the medium,
- with a multi-part housing (12, 14), which comprises a valve housing (14) and a base housing (12), which is connectable to one another via an interface (16) by means of connecting elements (41, 42),
- with a regulating chamber (24) formed between the base housing (12) and the valve housing (14), in which a valve closing member (25) is provided, which in a closed position (54) bears against a valve seat (23) of the valve housing (14) and closes an opening (22) in the valve housing (14) and is transferrable into a working position (55) against an actuating force of a resetting element (33) and releases the valve opening (22), wherein the valve housing (14) and the valve closing member (25) arranged displaceably in the regulating chamber (24) lie in a common longitudinal axis (64),
**characterized in**
- **that** the interface (16) between the valve housing (14) and the base housing (12) comprises an axial play (B), by means of which the distance between the valve housing (14) and the base housing (12) is varyable, and
- **that** a distance between a mounting section (38) provided on the base housing (12), by means of which the base housing (12) is fixable to the connection point (76) by a releasable fastening element (82), and an end face (21) on the valve housing (14) opposite the base housing (12) has an installation length (A) when the base housing (12) is arranged with respect to the valve housing (14) with play (B), which is smaller than an installation dimension (E) in the connection point (76) and, when the base housing (12) is arranged relative to the valve housing (14) without play (B), the base housing (12) and the valve housing (14) have a length which is equal to or greater than the installation dimension (E) of the connection point (76).

2. . Check valve according to claim **1, characterized in that** the base housing (12) and the valve housing (14) are guided so as to be displaceable relative to one another along the longitudinal axis (64) by the axial play of the interface (16) and are preferably guided so as to be rotatable radially relative to one another.

3. . Check valve according to one of the preceding claims, **characterized in that** the interface (16) comprises connecting elements (41, 42) which form a detachable connection between the base housing (14) and the valve housing (12).

4. Check valve according to claim **3, characterized in that** the first connecting element (42), which forms the interface (16), is designed as a circumferential groove, and the second connecting element (41) consists of at least one, preferably several, latching hooks, which engages in the first connecting element (42), and preferably wherein the latching hook formed as the second connecting element (41), starting from an undercut (59) on the latching hook up to the end face end (58) of the latching hook, comprises a length which is smaller than the width of the circumferential groove (42).

5. Check valve according to one of claims 3 or 4, **characterized in that** the connecting elements (41, 42) each have guide surfaces directed towards one another, wherein a guide surface on the base housing (12) extends from the groove (42) in the axial direction onto the valve housing (14) and the guide surface arranged on the undercut (59) of the latching hook (41) extends in the groove (42).

6. Check valve according to one of the preceding claims, **characterized in that** a circumferential guide flange (44) is provided on the valve housing (14) pointing towards the base housing (12), and preferably the valve housing (14) is guided with the guide flange on the guide surface (44) of the base housing (12) so as to be axially displaceable and/or radially rotatable, and preferably the guide flange (44) is interrupted by at least one connecting element (41) designed as a latching hook.

7. Check valve according to one of claims 1 to 6, **characterized in that** the valve housing (14) comprises the valve opening (22) aligned in the longitudinal axis (64) to the valve housing (14), and this valve opening (22) is adjoined by a radial wall section, at the end of which opposite the valve opening (22) the at least one connecting element (41) of the interface (16) is provided and preferably openings (46) are provided in the radial wall section of the valve housing (14), which are elongate and extend in the circumferential direction and preferably webs (47) extend between the openings (46), which webs connect the valve seat (23) of the valve housing (14) surrounding the valve opening (22) to the connecting elements (41, 42).

8. Check valve according to one of the preceding claims, **characterized in that** a guide section (29) is provided on a valve closing member (25), which extends into the base housing (12) and is guided longitudinally displaceably therein and preferably the resetting element (33) is provided between the valve closing member (25) and the base housing (12) under a prestressing force and/or **in that** the valve closing member (25) has at least one guide blade (51) opposite the closing surface (26), which extends parallel to the longitudinal axis (64) of the valve housing (14) and preferably the guide plate (51) has a radially outwardly facing end face (52), the axial length of which is greater than the width of the aperture (46) in the radial wall section.

9. Check valve according to one of the preceding claims, **characterized in that** the valve seat (23) of the valve housing (14) has a bearing surface (61) on which the valve closing member (25) rests in its closed position (54) and has a sealing surface (62), against which a sealing element (27) of the valve closing member (25) bears, the bearing surface (61) and sealing surface (62) being formed separately from one another and preferably adjoining one another and, in particular, the sealing element (27) being stretched on, clamped on, vulcanized onto and/or glued onto the valve closing member (25).

10. Check valve according to claim 9, **characterized in that** the bearing surface (61) is aligned at an angle α between 10° and 90° to the longitudinal axis (64) of the valve housing (14) and preferably the sealing surface (62) is aligned at an angle β of 90° or less to the longitudinal axis (64).

11. Check valve according to one of claims 9 or 10, **characterized in that** a contact pressure of the sealing element (27) of the valve closing member (25) in the closing position (54) is adjustable by an axial distance of the sealing surface (62) to the contact surface (61) on the valve seat (23).

12. Check valve according to one of the preceding claims, **characterized in that** the valve housing (14) and/or the valve closing member (25) is made of plastic and the base housing (12) is made of plastic or of a metallic material, in particular a light-metal material.

13. A system comprising a check valve (11) according to any one of the preceding claims and a connection device (71) for said check valve (11), wherein the connection device (71) comprises:
- a connection point (76) into which the check valve (11) is insertable from the outside via a connection opening (77) of the connection point (76),
- a base body (73), in which a feed channel with a feed opening (72) is provided, which opens into the connection point (76) in the base body (73),
- an outlet opening (74), which connects the connection point (76) to an outlet channel,
- a first plug-in section (78) in the connection point (76), which is provided between the feed opening (72) and the outlet opening (74), in which the valve housing (14) is positionable, and
- a second plug-in section (79) in the connection point (76), which is provided between the feed opening (72) and the connection opening (74), in which the base housing (12) of the check valve (11) is fixed, wherein the base housing (12) is fixed with a releasable fastening element (82) in the second plug-in section (79) in the axial direction to the connection point (76) and the valve housing (14) is positioned in the first plug-in section (78) of the connection point (76) so as to be displaceable in the axial direction.

14. System according to claim 13, **characterized in that** the check valve (11) is fixed in the second plug-in section (79) by a releasable fastening element (82), in which the base housing (12) rests with the stop face (37) on a shoulder (81) of the second plug-in section (79) and the releasable fastening element (82) on an assembly section (38) of the base housing (12),
- which is opposite the stop surface (37), and fixes the basic housing (12) in the second plug-in section (79) and/or **in that** a sealing element (36), preferably a sealing element (36) acting in the radial direction, is provided between the basic housing (12) and the second plug-in section (79) and between the valve housing (14) and the first plug-in section (78).

## Revendications

1. Clapet anti-retour, notamment pour un circuit de réfrigération ou de chauffage, qui peut être inséré dans un point de raccordement (76) d'un dispositif de raccordement (71) qui présente une ouverture d'alimentation (72) pour l'alimentation d'un fluide et une ouverture de sortie (74) pour l'évacuation du fluide,
- avec un boîtier (12, 14) en plusieurs parties, qui comprend un boîtier de soupape (14) et un boîtier de base (12), qui peuvent être reliés entre eux par une interface (16) au moyen d'éléments de liaison (41, 42),
- avec un espace de régulation (24) formé entre le boîtier de base (12) et le boîtier de soupape (14), dans lequel est prévu un organe de fermeture de soupape (25) qui, dans une position de fermeture (54), s'applique contre un siège de soupape (23) du boîtier de soupape (14) et ferme une ouverture (22) dans le boîtier de soupape (14) et peut être transféré dans une position de travail (55) contre une force de réglage d'un élément de rappel (33) et libère l'ouverture de soupape (22), le boîtier de soupape (14) et l'organe de fermeture de soupape (25) disposé de manière à pouvoir être déplacé dans la chambre de régulation (24) étant situés sur un axe longitudinal commun (64),
**caractérisé en ce**
- **que** l'interface (16) entre le boîtier de soupape (14) et le boîtier de base (12) comprend un jeu axial (B) par lequel la distance entre le boîtier de soupape (14) et le boîtier de base (12) peut être modifiée, et
- **qu'**une distance entre une section de montage (38) prévue sur le boîtier de base (12), par laquelle le boîtier de base (12) peut être fixé par un élément de fixation amovible (82) par rapport au point de raccordement (76), et une face frontale (21) opposée au boîtier de base (12) sur le boîtier de soupape (14) présente une longueur de montage (A) dans le cas d'une disposition du boîtier de base (12) par rapport au boîtier de soupape (14) avec jeu (B), qui est inférieure à une cote de montage (E) dans le point de raccordement (76) et, lorsque le boîtier de base (12) est disposé par rapport au boîtier de soupape (14) sans jeu (B), le boîtier de base (12) et le boîtier de soupape (14) présentent une longueur qui est égale ou supérieure à la cote de montage (E) du point de raccordement (76).

2. . Clapet anti-retour selon la revendication 1, **caractérisé en ce que** le boîtier de base (12) et le boîtier de clapet (14) sont guidés de manière à pouvoir se déplacer l'un par rapport à l'autre le long de l'axe longitudinal (64) grâce au jeu axial de l'interface (16) et sont de préférence guidés de manière à pouvoir tourner radialement l'un par rapport à l'autre.

3. **.** Clapet anti-retour selon l'une quelconque des revendications précédentes, **caractérisé en ce que** l'interface (16) comprend des éléments de liaison (41, 42) formant une liaison amovible entre le corps de base (14) et le corps de clapet (12).

4. . Clapet anti-retour selon la revendication 3, **caractérisé en ce que** le premier élément de liaison (42), qui forme l'interface (16), est réalisé sous la forme d'une rainure périphérique, et le deuxième élément de liaison (41) est constitué d'au moins un, de préférence plusieurs, crochet d'arrêt, qui s'engage dans le premier élément de liaison (42), et de préférence dans lequel le crochet d'encliquetage réalisé en tant que deuxième élément de liaison (41) comprend, en partant d'une contre-dépouille (59) sur le crochet d'encliquetage jusqu'à l'extrémité frontale (58) du crochet d'encliquetage, une longueur qui est inférieure à la largeur de la rainure périphérique (42).

5. . Clapet anti-retour selon l'une des revendications 3 ou 4, **caractérisé en ce que** les éléments de liaison (41, 42) présentent chacun des surfaces de guidage dirigées l'une vers l'autre, une surface de guidage sur le boîtier de base (12) s'étendant axialement depuis la rainure (42) vers le boîtier de clapet (14) et la surface de guidage disposée sur la contre-dépouille (59) du crochet d'arrêt (41) s'étendant dans la rainure (42).

6. . Clapet anti-retour selon l'une des revendications précédentes, **caractérisé en ce qu'**une bride de guidage (44) périphérique est prévue sur le boîtier de clapet (14), orientée vers le boîtier de base (12), et de préférence le boîtier de clapet (14) est guidé avec la bride de guidage sur la surface de guidage (44) du boîtier de base (12) de manière à pouvoir se déplacer axialement et/ou tourner radialement, et de préférence la bride de guidage (44) est interrompue par au moins un élément de liaison (41) conçu comme un crochet d'arrêt.

7. . Clapet anti-retour selon l'une des revendications 1 à 6, **caractérisé en ce que** le boîtier de clapet (14) comprend l'ouverture de clapet (22) orientée dans l'axe longitudinal (64) vers le boîtier de clapet (14), et à cette ouverture de clapet (22) se raccorde une section de paroi radiale, à l'extrémité opposée à l'ouverture de clapet (22) de laquelle est prévu l'au moins un élément de liaison (41) de l'interface (16), et de préférence dans la section de paroi radiale du boîtier de clapet (14) sont prévus des ajours (46), qui sont de forme allongée et s'étendent dans la direction circonférentielle et, de préférence, entre les ajours (46) s'étendent des nervures (47) qui relient le siège de soupape (23) du boîtier de soupape (14) entourant l'ouverture de soupape (22) aux éléments de liaison (41, 42).

8. . Clapet anti-retour selon l'une des revendications précédentes, **caractérisé en ce qu'**il est prévu sur un organe de fermeture de soupape (25) une section de guidage (29) qui s'étend dans le boîtier de base (12) et y est guidée de manière à pouvoir se déplacer longitudinalement et, de préférence, l'élément de rappel (33) est prévu entre l'organe de fermeture de soupape (25) et le boîtier de base (12) sous une force de précontrainte et/ou **en ce que** l'organe de fermeture de soupape (25) présente, en face de la surface de fermeture (26), au moins une lamelle de guidage (51), qui s'étend parallèlement à l'axe longitudinal (64) du boîtier de soupape (14) et de préférence la lamelle de guidage (51) présente une face frontale (52) orientée radialement vers l'extérieur, dont la longueur axiale est supérieure à la largeur de l'ajour (46) dans la section de paroi radiale.

9. **.** Clapet anti-retour selon l'une des revendications précédentes, **caractérisé en ce que** le siège de soupape (23) du corps de soupape (14) présente une surface d'appui (61) sur laquelle repose l'organe de fermeture de soupape (25) dans sa position de fermeture (54) et présente une surface d'étanchéité (62), sur laquelle s'appuie un élément d'étanchéité (27) de fermeture de soupape (25), la surface d'appui (61) et la surface d'étanchéité (62) étant réalisées séparément l'une de l'autre et étant de préférence adjacentes l'une à l'autre, et en particulier l'élément d'étanchéité (27) étant tendu, serré, vulcanisé et/ou collé sur l'obturateur de soupape (25).

10. . Clapet anti-retour selon la revendication **9, caractérisé en ce que** la surface d'appui (61) est orientée selon un angle α compris entre 10° et 90° par rapport à l'axe longitudinal (64) du corps de clapet (14) et, de préférence, la surface d'étanchéité (62) est orientée selon un angle β inférieur ou égal à 90° par rapport à l'axe longitudinal (64).

11. . Clapet anti-retour selon l'une des revendications 9 ou 10, **caractérisé en ce qu'**une distance axiale entre la surface d'étanchéité (62) et la surface d'appui (61) sur le siège de soupape (23) permet de régler une pression d'appui de l'élément d'étanchéité (27) de l'organe de fermeture de soupape (25) dans la position de fermeture (54).

12. . Clapet anti-retour selon l'une des revendications précédentes, **caractérisé en ce que** le corps de clapet (14) et/ou l'obturateur de clapet (25) sont réalisés en matière plastique et le corps de base (12) est réalisé en matière plastique ou en un matériau métallique, notamment en un matériau métallique léger.

13. . Système comprenant un clapet anti-retour (11) selon l'une des revendications précédentes et un dispositif de raccordement (71) pour ledit clapet anti-retour (11), le dispositif de raccordement (71) comprenant :
- un point de raccordement (76) dans lequel le clapet anti-retour (11) peut être inséré de l'extérieur par une ouverture de raccordement (77) du point de raccordement (76),
- un corps de base (73), dans lequel est prévu un canal d'alimentation avec une ouverture d'alimentation (72), qui débouche dans le point de raccordement (76) dans le corps de base (73),
- un orifice de sortie (74) qui relie le point de raccordement (76) à un canal de sortie,
- une première section enfichable (78) dans le point de raccordement (76), qui est prévue entre l'ouverture d'alimentation (72) et l'ouverture de sortie (74), dans laquelle le boîtier de soupape (14) peut être positionné, et
- une deuxième section d'enfichage (79) dans le point de raccordement (76), qui est prévue entre l'ouverture d'alimentation (72) et l'ouverture de raccordement (74), dans laquelle le boîtier de base (12) du clapet anti-retour (11) est fixé, le boîtier de base (12) étant fixé avec un élément de fixation amovible (82) dans la deuxième section d'enfichage (79) dans la direction axiale par rapport au point de raccordement (76) et le boîtier de clapet (14) étant positionné de manière déplaçable dans la direction axiale dans la première section d'enfichage (78) du point de raccordement (76).

14. . Système selon la revendication 13, **caractérisé en ce que** le clapet anti-retour (11) est fixé dans la deuxième section enfichable (79) par un élément de fixation amovible (82), dans lequel le boîtier de base (12) repose avec la surface de butée (37) sur un épaulement (81) de la deuxième section enfichable (79) et l'élément de fixation amovible (82) est fixé sur une section de montage (38) du boîtier de base (12), qui est opposée à la surface de butée (37) et fixe le boîtier de base (12) dans la deuxième section d'enfichage (79) et/ou **en ce qu'**il est prévu entre le boîtier de base (12) et la deuxième section d'enfichage (79) ainsi qu'entre le boîtier de soupape (14) et la première section d'enfichage (78) respectivement un élément d'étanchéité (36), de préférence un élément d'étanchéité (36) agissant dans la direction radiale.
